# EUROPEAN PATENT SPECIFICATION

(11) **EP 3 581 080 B1**
(45) Date of publication and mention of the grant of the patent: **02.08.2023**
(21) Application number: 19176508.0
(22) Date of filing: 24.05.2019
(51) Int. Cl.: A47J 43/07

(54) **KITCHEN APPLIANCE, FOOD CONTAINER ELEMENT AND FLOW BREAKER PROVIDING FOR PERTURBED FOOD CIRCULATION**
KÜCHENGERÄT, LEBENSMITTELBEHÄLTERELEMENT UND STRÖMUNGSBRECHER FÜR EINE GESTÖRTE NAHRUNGSMITTELZIRKULATION
APPAREIL DE CUISINE, ÉLÉMENT DE RÉCIPIENT POUR ALIMENTS ET DISJONCTEUR D'ÉCOULEMENT PERMETTANT UNE CIRCULATION PERTURBÉE DES ALIMENTS

(30) Priority: 11.06.2018 IN 201841021760
(43) Date of publication of application: 18.12.2019
(73) Proprietor: BSH Hausgeräte GmbH, 81739 München (DE)
(72) Inventor: Goel, Rahul, 110087 New Delhi (IN); Pandey, Dharmendra, 400093 Mumbai (IN); Radhakrishnan, Chamundeeswaran, 600122 Mangadu (IN)

(56) References cited:
- DE-A1-102011 051 860
- GB-A- 2 551 162
- KR-U- 20100 001 541
- US-A1- 2012 294 108

## Description

The present invention concerns a food container element configured to encompass food being processed by one or more rotating tool(s) of a kitchen appliance, wherein the food container element comprises a flow breaker for perturbing a circulation of the food being processed. The invention further comprises a flow breaker for such food container element, and a kitchen appliance comprising a food container element.

Various kitchen appliances are configured to process wet or dry food, e.g. by mixing, stirring and/or milling. For the processing, the food (or components thereof) is usually filled into a food container element comprising or being combined to a bottom, and a rotating tool such as a beater or one or more blade(s) extending into the food may be rotated manually or by means of an electromotor.

As a consequence of the rotation, due to centrifugal forces, circulating portions of the food may be spun to an inner surface of the food container element and be adhered thereto, so that they cannot be further reached by the rotation element. As a consequence, a cumbersome manual intervention interrupting the processing operation may be required, to facilitate a uniform processing of the food and to avoid a waste of food portions sticking to the inner surface of the food container element.

To reduce said occurrence, known food container elements exhibit flow breakers incorporated in an inner surface of the respective food container element. Therewith, a perturbation of the circulation of the processed food parts may be effected, which may result in rotating food portions being redirected towards a centre of the food container element and, therewith, towards the rotating tool. DE 10 2011 05 18 60 A1 shows an example of food container element with a flow breaker.

However, in order that such integrated flow breakers do not unduly complicate the action of taking the processed food out of the food container element and the cleaning thereof, they are shaped as a surface profile comprising elongated, but merely shallow depressions and/or elevations. Such profile may not be sufficient to provide for redirecting a satisfactory proportion the food.

It is, therefore, an object of the present invention to provide an improved technique overcoming the above disadvantages, allowing for an advantageous redirection of circulating food being processed, while avoiding disadvantages with regard to the taking of the food after the processing and the cleaning of the food container element.

The problem is solved by a food container element according to claim 1 and by a kitchen appliance according to claim 6.

Advantageous embodiments are disclosed in the dependent claims, the description and the figures.

A food container element according to the present invention is configured to enclose food being processed by at least one rotating tool of a kitchen appliance. Accordingly, during the processing, the food container surrounds a section of an axis of rotation of the rotating tool. The food container element comprises at least one flow breaker for perturbing a circulation of the food when this is being processed. The at least one flow breaker is configured to be detachably fixed in an interior of the food container element.

The detachability in particular provides for the advantage that, in respective application situations, the at least one flow breaker may be either used or omitted, e.g. depending on a user preference and/or on the respective food to be processed.

Moreover, due to the fixation of the at least one flow breaker being detachable, the present invention provides for the further advantage that processed food may be taken out of the food container element after the at least one flow breaker is removed from the interior of the food container element. Thus, neither the taking of the processed food nor a subsequent cleaning of the food container element is disturbed by the flow breaker.

As a consequence, a dimension of the at least one flow breaker may be irrespective of restricting considerations regarding the taking of the processed food and the cleaning of the food container element. That is, the dimension may be chosen to be optimal for avoiding that the centrifuged circulating portions of the food are adhered to an inner surface of the food container element, so that they cannot be further reached by the rotation element. Such optimal dimension may depend on a respective type of the food being (or to be) processed.

According to a particular embodiment, the at least one flow breaker is at least one first flow breaker having first dimensions, and the food container element further comprises at least one second food breaker perturbing a circulation of the food when being processed, the at least one second food breaker having second dimensions different from the first dimensions. Therein, the at least one first and the at least one second food breakers may be configured to selectively be detachably fixed in the interior of the food container element.

The food container element of this embodiment thus provides for further flexibility in use. For instance, the first dimension may be optimised for processing dry food, and the second dimension may be optimised for processing wet food.

In the following, to facilitate legibility, the term "at least one" is repeatedly omitted. As is to be understood, however, even if not explicitly mentioned each time, one or more of possibly various flow breakers comprised by the food container element may have the respectively mentioned properties.

The tool (which is rotating for the processing) may or may not be comprised by the food container element. It may comprise one or more blade/s and/or one or more loop/s.

The food container element may or may not comprise a bottom; if it does not, the food container element may have a tubular or funnel-like, curved or straight shape with an end being configured (e.g. by comprising a screw thread and/or a bayonet joint) to be connected to a bottom, the bottom being a separate element which may then close the food container element at said end. If, however, the food container element (itself) comprises a bottom, this bottom may be permanently installed, or it may be detachably connected or connectable (e.g. screwed or by means of a bayonet joint) to a wall portion of the food container element. In either case, the rotatable tool (rotating during the processing), which may or may not be comprised by the food container element, may be supported by the bottom or configured to be inserted into the food container element from a side opposite to the bottom.

According to an advantageous embodiment, the interior of the food container element is essentially shaped rotational symmetric (by a fixed angle such as by 45°, 60°, 72°, 90°, 120° or 180°, or by any angle) with respect to a central axis. Said central axis may be parallel to or even coincide with an axis of rotation of the at least one tool.

The flow breaker may extend towards such central axis by at least an eighth, a sixth, at least a fifth or at least a quarter portion of a mean diameter of the interior of the food container element. Additionally or alternatively, the flow breaker may extend in a direction parallel to the central axis by at least a third, at least a half or at least three quarter portions of an extent of the interior of the food container element in this direction. These dimensions exhibit particularly advantageous effects with respect to reducing that processed food is adhered to an inner surface of the food container element.

The flow breaker may be shaped as a rail which, in the fixed state may extend basically in a direction parallel to a central axis of the interior of the food container element and/or to an axis of rotation of the tool/s. Additionally or alternatively, the flow breaker may preferably thicken in a radial direction away from the central axis or the axis of rotation, respectively: This facilitates an advantageously firm and resistant (detachable) fixation. In particular, the rail may have essentially an L-shaped or T-shaped cross-section comprising an edge protruding basically radial to said central axis and/or said axis of rotation.

A food container element according to a preferred embodiment comprises a bracket which may be connected or connectable to a surface of the food container element, e.g. by screws, rivets and/or a snap mechanism. The flow breaker may then be configured to be detachably fixed to the bracket.

This embodiment is particularly advantageous to upgrade a food container element so as to conform to the present invention, thus to comprise a detachably fixable food breaker: Indeed, the food breaker and the bracket may be shaped fitting to each other, e.g. by a form-fitting structure as mentioned below. The bracket, however, which may not be devised to be (frequently) removed from said surface of the food container element, may be connected or connectable to said surface by a means requiring at most a marginal adaptation of a conventional food container element, such as a hole for a screw or rivet, for example.

According to the present invention, the food container element exhibits a form-fitting configuration providing for or contributing to the detachable fixing of the flow breaker element (possibly in combination with a further configuration).

In particular, such form-fitting configuration may comprise a slide lock mechanism, a snap connection and/or a fin-and-groove structure comprising one or more fin/s and one or more groove/s configured to be engaged with one another (by inserting the fin/s into the respective groove/s) to detachably fix the food breaker in the interior of the food container element.

Preferably, for at least one of such fin/s, insertion into a respective groove is possible solely in a longitudinal direction of the groove, from both ends of the groove or even only from one end (which is further referred to as an insertion opening) of the groove. The form-fitting configuration may comprise a barrier defining a devised insertion direction and/or serving as a stopper in an insertion movement. Thus, in particular, such barrier may ensure a correct positioning of a fin within a groove and, therewith, of the flow breaker in the interior of the food container element.

Each one of such fin/s may protrude from the flow breaker or from a surface the flow breaker may detachably be fixed to. In particular, in embodiments comprising a bracket as mentioned above, one or more of the fin/s may protrude from a surface of the bracket.

Analogously, each one of the groove/s may extend in the flow breaker or in a surface the flow breaker may detachably be fixed to. In particular, in embodiments comprising a bracket, one or more of the groove/s may extend in the bracket.

According to the invention, one or more of the fin/s and/or groove/s extend in a direction coaxial to a rotation direction of the tool.

According to the invention, at least one of the groove/s and/or at least one of the fin/s is formed in the flow breaker and extends, when the flow breaker is detachably fixed, in a direction coaxial to a rotation direction of the tool. Therein, the insertion of the fin into the respective groove is preferably possible only from an insertion opening and in a mean rotation direction of the tool, whereas at the opposite end of the groove, a barrier as mentioned above may be provided: Thereby, it is inhibited that centrifuged food pushes the fin out of the groove, thus loosening the detachable fixation.

As a further example, at least one of the fin/s may protrude from the flow breaker and extend, when the flow breaker is detachably fixed, towards a bottom region of the food container element, i.e. to a region, where a bottom of the food container element is provided or where a bottom can be connected to the food container element. Analogously (additionally or alternatively), at least one of the groove/s may be formed in the flow breaker and extend, when the flow breaker is detachably fixed, towards the bottom region of the food container element.

The food container element may comprise a handle (for the food container element being grasped). At a state when the flow breaker is detachably fixed in the interior of the food container element, the flow breaker and the handle preferably extend along a common ray running radially away from a central axis of the interior of the food container element. Thus, in this case, the flow breaker and the handle extend to opposite directions from a wall of the food container element. Thereby, the region in which the flow breaker can be detachably fixed may be enforced by the handle, so that the fixation is particularly solid and a frequent detaching of the flow breaker does not impair the food container element. Especially, in an embodiment comprising a bracket as mentioned above, the bracket may preferably be connected or connectable to a reinforced mounting region for the handle (at which the handle extends at an exterior side of a wall of the food container direction) and/or even to a portion of the handle. The connection may be realised e.g. by a screw or a rivet directed from the interior of the food container element into said reinforced mounting region and/or the portion of the handle, or reversely.

An inventive flow breaker serves as a flow breaker of an embodiment of the food container elements according to the present invention. Thus, in particular, the flow breaker is configured to be detachably fixed in the interior of a corresponding food container element.

A kitchen appliance according to the present invention comprises a food container element according to an embodiment of the present invention, with at least one rotatable tool arranged permanently or configured to be detachably arranged at a bottom of the food container element.

The kitchen appliance may further comprise an electromotor configured to drive the rotatable tool. As a particular example, the kitchen appliance may be a grinder and/or a blender.

In the following, a preferred embodiment of the present invention is explained with respect to accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: an exemplary embodiment of a food container element according to the present invention;
- Fig. 2a: an exemplary embodiment of a flow breaker according to the present invention connected to a bracket;
- Fig. 2b:: the flow breaker and the bracket of Figure 2a in a separated stated; and
- Fig. 3:: an exemplary kitchen appliance according to the present invention.

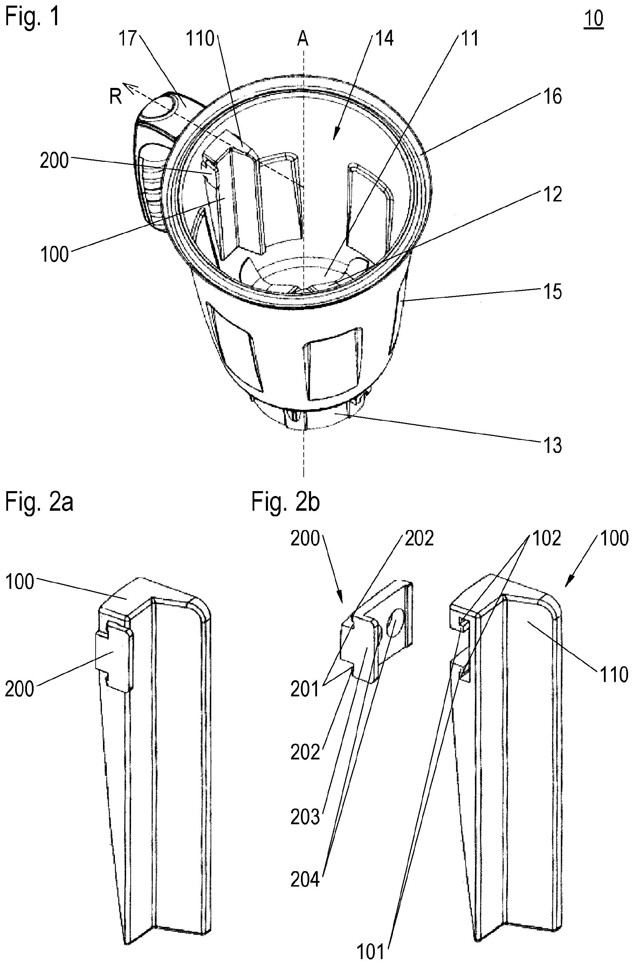

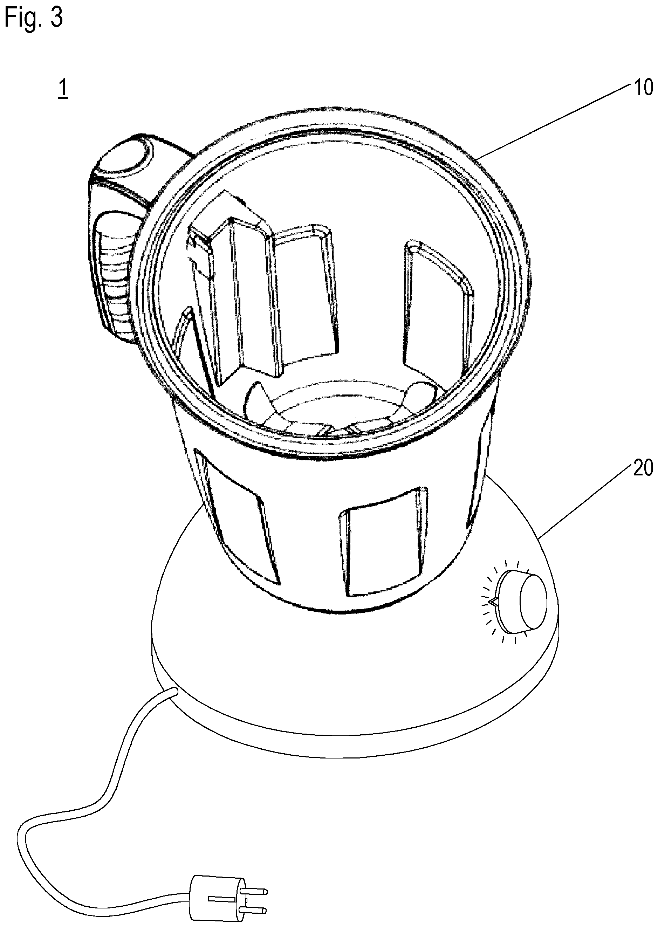

In Figure 1, a food container element 10 according to an embodiment of the present invention is shown. In the present exemplary case, the food container element comprises a permanently installed bottom 11 and a rotatable tool 12 supported by the bottom 11, the tool 12 comprising various blades for processing food. The bottom 11 is part of a base 13 configured to be combined with (namely, inserted into) a socket of a kitchen appliance (as shown in Figure 3).

A plurality of (in the present case six) shallow, elongated profile members 15 (protruding into the interior 14 of the food container element 10) is incorporated (thus permanently installed) in an inner surface of the food container element, to slightly perturb a circulation of food being processed in the interior 14, without unduly complicating a taking out of processed food and/or a cleaning operation. An interior 14 of the food container element 10 is essentially rotationally symmetric, by 60° due to the six profile members, with regard to a central axis A which, in the depicted example coincides with a rotation axis of the tool 12.

To grasp the food container element, a handle 17 radially extends, at an exterior side, from a wall 16 of the food container element.

Moreover, the food container element 10 comprises a flow breaker 100 according to an embodiment of the present invention, the flow breaker 100 being devised for perturbing a circulation of the food when being processed. In the state depicted in Figure 1, the flow breaker is detachably fixed in the interior 14 of the food container element 10. In this state, the flow breaker 100, which is shaped as a rail having essentially an L-shaped cross section, extends in a direction parallel to the central axis A by about two thirds of an extent of the interior 14 of the food container element in this direction. An edge 110 protrudes basically radially with respect to the central axis A. Therewith, the flow breaker extends towards the central axis A by about a fifth of a mean diameter of the interior 14 of the food container element.

To implement the fixation, the food container element 10 further comprises a bracket 200.

In the depicted state, where the flow breaker 100 is fixed in the interior 14 of the food container element 10, the flow breaker 100 and the handle 17 extend along a common ray R running radially away from the central axis A. In particular, the bracket 200 providing for the fixation of the flow breaker 100 is connected to the wall 16 in a mounting region for the handle (at which the handle extends, at an exterior side, from the wall of the food container direction). In the mounting region, the wall may preferably be reinforced, and/or the bracket may be connected to a portion of the handle (e.g. by a screw or rivet extending though the wall 16). Thereby, a particularly solid fixation of the flow breaker 100 can be realised, and a frequent detaching of the flow breaker 100 does not impair the food container element.

In Figures 2a and 2b, the flow breaker 100 and the bracket 200 are shown in more detail, in a state connected to each other (Fig. 2a) and separate from each other (Fig. 2b).

A form-fitting configuration comprising a fin-and-groove structure (with fins 101, 202 protruding from the flow breaker 100 and the bracket 200, respectively, configured to be engaged with grooves 102, 201 extending in the flow breaker 100 and the bracket 200, respectively) provides for a detachable fixing of the flow breaker 100 to the bracket 200.

In the depicted exemplary embodiment, the form-fitting configuration comprises a barrier 203 which inhibits an insertion of the fins 101 into the grooves 201 and of the fins 202 into the grooves 102 from one side, and which further serves as a stopper for an insertion movement. As a consequence, barrier 203 ensures a correct positioning of the fins within the respective grooves and, therewith, of the flow breaker 100 in the interior 14 of the food container element 10 (shown in Figure 1).

As can be further seen in Figure 2b, two holes 204 are provided in the bracket 200. To connect the bracket 200 to the wall 16 of the food container element 10 (as shown in Figure 1), a screw or a rivet may be inserted through each or one of the holes 204.

In Figure 3, a kitchen appliance 1 according to an exemplary embodiment of the present invention is shown. The kitchen appliance comprises a food container element 10 as shown in Figure 1 and described with respect thereto, and a socket 20 comprising an electromotor to drive the tool 12 (as indicated by the cable with the plug). In the depicted situation, the base 13 (shown in Figure 1) of the food container element 10 is inserted into a hole providing an adapter for the tool 12 (not visible in Figure 3) for connection with the electromotor.

Disclosed is a food container element 10 configured to enclose food being processed by at least one rotating tool 12 of a kitchen appliance 1, wherein the food container element 10 includes at least one flow-breaker 100 for perturbing a circulation of the food when being processed. Therein, the flow breaker 100 is configured to be detachably fixed in an interior 14 of the food container element 10.

Further disclosed are a flow breaker 100 for a food container element 10 and a kitchen appliance comprising a food container element 100.

### Reference signs

- 1: kitchen appliance

- 10: food container element
- 11: bottom of food container element
- 12: rotatable/ rotating tool
- 13: base of food container element
- 14: interior of food container element
- 15: elongated profile member
- 16: wall of food container element
- 17: handle

- 100: flow breaker
- 101: fins protruding from a surface of the flow breaker 100
- 102: groove in a surface of the flow breaker
- 110: edge of the flow breaker 100

- 200: bracket
- 201: groove in a surface of the bracket
- 202: fins protruding from a surface of the bracket
- 203: barrier
- 204: hole

- A: central axis of the interior 14 of the food container element 10
- R: ray running radially away from the central axis A

## Claims

1. Food container element (10) configured to enclose food being processed by at least one rotating tool (12) of a kitchen appliance, wherein the food container element includes a flow-breaker (100) for perturbing a circulation of the food when being processed, wherein the flow breaker (100) is configured to be detachably fixed in an interior (14) of the food container element (10),
the food container element exhibiting a form fitting configuration providing for or contributing to the detachable fixing of the flow breaker element,
wherein the form fitting configuration comprises at least one fin-and-groove structure comprising one or more fin/s (101, 202) and one or more groove/s (102, 201), the fin/s configured to be inserted into a respective one of the groove/s,
wherein
- at least one of the fin/s (101) protrudes from the flow breaker (100) and/or
- at least one of the groove/s (102) extends in the flow breaker (100) being **characterised in that** in a fixed state of the flow breaker, which is inserted in a direction coaxial to a rotation direction of the tool, one or more of the fin/s and/or groove/s extend in the same direction.

2. Food container element according to claim 1, wherein the interior (14) of the food container element is essentially rotational symmetric with respect to a central axis (A), and wherein the flow breaker (100)
- extends towards the central axis (A) by at least an eighth, at least a sixth, at least a fifth or at least a quarter portion of a mean diameter of the interior (14) of the food container element (100); and/or
- extends in a direction parallel to the central axis (A) by at least a third, at least a half or at least three quarter portions of an extent of the interior (14) of the food container element in this direction.

3. Food container element according to one of claims 1 or 2, comprising a bracket (200) connected or connectable to a surface of the food container element, wherein the flow breaker (100) is configured to be detachably fixed to the bracket (200).

4. Food container element according to claim 1, wherein in a fixed state of the flow breaker, the at least one of the fin/s (101) and/or the at least one of the groove/s (102) extends
- in a direction approaching a bottom region of the food container element.

5. Food container element according to one of the preceding claims, further comprising a handle (17), wherein in a detachably fixed state of the flow breaker, the flow breaker (100) and the handle (17) extend in opposite directions from a wall (16) of the food container element.

6. Kitchen appliance (1) comprising a food container element (10) according to one of claims 1 to 5, with at least one rotatable tool (12) arranged permanently or configured to be detachably arranged at a bottom (13) of the food container element.

## Patentansprüche

1. Lebensmittelbehälterelement (10), das so konfiguriert ist, dass es Lebensmittel umgibt, die mit mindestens einem rotierenden Werkzeug (12) eines Küchengeräts verarbeitet werden, wobei das Lebensmittelbehälterelement einen Strömungsbrecher (100) zum Unterbrechen eines Zirkulierens der Lebensmittel beim Verarbeiten umfasst, wobei der Strömungsbrecher (100) so konfiguriert ist, dass er sich lösbar in einem Innenraum (14) des Lebensmittelbehälterelements (10) fixieren lässt,
wobei das Lebensmittelbehälterelement eine formschlüssige Gestaltung aufweist, die das lösbare Fixieren des Strömungsbrecherelements ermöglicht oder dazu beiträgt, wobei die formschlüssige Gestaltung mindestens eine Rippe-Nut-Konstruktion umfasst, die eine oder mehrere Rippen (101, 202) und eine oder mehrere Nuten (102, 201) umfasst, wobei die Rippen so konfiguriert sind, dass sie sich jeweils in eine der Nuten einführen lassen, wobei
- mindestens eine der Rippen (101) von dem Strömungsbrecher (100) vorsteht und/oder
- sich mindestens eine der Nuten (102) in dem Strömungsbrecher (100) erstreckt, **dadurch gekennzeichnet, dass** sich in einem fixierten Zustand des Strömungsbrechers, der in einer koaxial zu einer Rotationsrichtung des Werkzeugs eingeführt ist, eine oder mehrere der Rippen und/oder Nuten in die gleiche Richtung erstrecken.

2. Lebensmittelbehälterelement nach Anspruch 1, wobei der Innenraum (14) des Lebensmittelbehälterelements in Bezug auf eine Mittelachse (A) im Wesentlichen rotationssymmetrisch ist und sich der Strömungsbrecher (100)
- zumindest um ein Achtel, ein Sechstel, ein Fünftel oder ein Viertel eines mittleren Durchmessers des Innenraums (14) des Lebensmittelbehälterelements (100) zur Mittelachse (A) hin erstreckt und/oder
- in einer parallel zur Mittelachse (A) verlaufenden Richtung zumindest um ein Drittel, zumindest um eine Hälfte oder zumindest um drei Viertel eines Maßes des Innenraums (14) des Lebensmittelbehälterelements in diese Richtung erstreckt.

3. Lebensmittelbehälterelement nach Anspruch 1 oder 2, das einen Bügel (200) umfasst, der mit einer Fläche des Lebensmittelbehälterelements verbunden oder verbindbar ist, wobei der Strömungsbrecher (100) so konfiguriert ist, dass er sich lösbar an dem Bügel (200) fixieren lässt.

4. Lebensmittelbehälterelement nach Anspruch 1, wobei sich die mindestens eine der Rippen (101) und/oder die mindestens eine der Nuten (102) in einem fixierten Zustand des Strömungsbrechers
- in eine Richtung zu einem Bodenbereich des Lebensmittelbehälterelements hin erstreckt.

5. Lebensmittelbehälterelement nach einem der vorhergehenden Ansprüche, das ferner einen Griff (17) umfasst, wobei sich der Strömungsbrecher (100) und der Griff (17) in einem lösbar fixierten Zustand des Strömungsbrechers in entgegengesetzter Richtung von einer Wand (16) des Lebensmittelbehälterelements aus erstrecken.

6. Küchengerät (1) mit einem Lebensmittelbehälterelement (10) nach einem der Ansprüche 1 bis 5, bei dem mindestens ein drehbares Werkzeug (12) dauerhaft an einem Boden (13) des Lebensmittelbehälterelements angeordnet oder so konfiguriert ist, dass es sich lösbar dort anordnen lässt.

## Revendications

1. Élément récipient pour aliments (10) configuré pour confiner des aliments qui sont traités par au moins un outil rotatif (12) d'un appareil de cuisine, dans lequel l'élément récipient pour aliments inclut un brise-écoulement (100) pour perturber une circulation des aliments lorsqu'ils sont traités, dans lequel le brise-écoulement (100) est configuré pour être fixé de manière détachable dans un intérieur (14) de l'élément récipient pour aliments (10),
l'élément récipient pour aliments présentant une configuration à ajustement de forme assurant ou contribuant à la fixation détachable de l'élément brise-écoulement,
dans lequel la configuration à ajustement de forme comprend au moins une structure ailetteet-rainure comprenant une ou plusieurs ailette/s (101, 202) et une ou plusieurs rainure/s (102, 201), la ou les ailette/s étant configurée/s pour être insérée/s dans une rainure respective parmi la ou les rainure/s,
dans lequel
- au moins l'une parmi la ou les ailette/s (101) fait saillie à partir du brise-écoulement (100) et/ou
- au moins l'une parmi la ou les rainure/s (102) s'étend dans le brise-écoulement (100)
étant **caractérisé en ce que**, dans un état fixé du brise-écoulement, qui est inséré dans une direction coaxiale à une direction de rotation de l'outil, l'une ou plusieurs parmi la ou les ailette/s et/ou rainure/s s'étend/ent dans la même direction.

2. Élément récipient pour aliments selon la revendication 1, dans lequel l'intérieur (14) de l'élément récipient pour aliments est essentiellement symétrique en rotation par rapport à un axe central (A), et dans lequel le brise-écoulement (100)
- s'étend vers l'axe central (A) sur au moins un huitième, au moins un sixième, au moins un cinquième ou au moins un quart d'un diamètre moyen de l'intérieur (14) de l'élément récipient pour aliments (100) ; et/ou
- s'étend dans une direction parallèle à l'axe central (A) sur au moins un tiers, au moins une moitié ou au moins trois quarts d'une étendue de l'intérieur (14) de l'élément récipient pour aliments dans cette direction.

3. Élément récipient pour aliments selon l'une des revendications 1 ou 2, comprenant un support (200) relié ou apte à être relié à une surface de l'élément récipient pour aliments, dans lequel le brise-écoulement (100) est configuré pour être fixé de manière détachable au support (200).

4. Élément récipient pour aliments selon la revendication 1, dans lequel dans un état fixé du brise-écoulement, l'au moins une parmi la ou les ailette/s (101) et/ou l'au moins une parmi la ou les rainure/s (102) s'étend
- dans une direction s'approchant d'une région de fond de l'élément récipient pour aliments.

5. Élément récipient pour aliments selon l'une des revendications précédentes, comprenant en outre une poignée (17), dans lequel dans un état fixé de manière détachable du brise-écoulement, le brise-écoulement (100) et la poignée (17) s'étendent dans des directions opposées à partir d'une paroi (16) de l'élément récipient pour aliments.

6. Appareil de cuisine (1) comprenant un élément récipient pour aliments (10) selon l'une des revendications 1 à 5, doté d'au moins un outil rotatif (12) agencé de manière permanente ou configuré pour être agencé de manière détachable au niveau d'un fond (13) de l'élément récipient pour aliments.
